# EUROPEAN PATENT SPECIFICATION

(11) **EP 0 476 828 B1**
(45) Date of publication and mention of the grant of the patent: **08.06.1994**
(21) Application number: 91307372.2
(22) Date of filing: 09.08.1991
(51) Int. Cl.: A01G 31/00

(54) **Straw slab hydroponic substrate**
Strohplatte für hydroponisches Substrat
Plaque de paille pour substrat hydroponique

(30) Priority: 09.08.1990 GB 9017462
(43) Date of publication of application: 25.03.1992
(73) Proprietor: MINISTER OF AGRICULTURE FISHERIES AND FOOD IN HER BRITANNIC MAJESTY'S GOV. OF THE U.K. OF GREAT BRITAIN AND NORTHERN IRELAND, London SW1P 2AE (GB)
(72) Inventor: Bradley, Malcolm Rutherford, Saxton, Tadcaster, North Yorkshire (GB)
(74) Representative: Lockwood, Peter Brian

(56) References cited:
- EP-A- 0 230 799
- WO-A-84/02827
- FR-A- 2 416 311
- GB-A- 551 502
- GB-A- 2 161 466
- US-A- 3 962 823

## Description

This invention relates to a horticultural substrate, and to a method of use thereof in growing plants.

In horticulture and agriculture some plants, such as cucumbers, tomatoes, sweet peppers and flower crops, are grown at least initially on substrates rather than directly in soil. Such substrates generally comprise a mass, which may be loose or compacted, of fibrous or particulate matter, which can absorb and retain water or nutrient solution and be well aerated. During growth the plants may be allowed to take root in the mass, and/or may be allowed to take root in soil in contact with the mass.

Various types of such substrates are known. The use of straw in loose bales as a substrate for growing cucumbers is known. To grow cucumbers in this way a standard rectangular straw bale is placed on the floor of a glasshouse, fertiliser is added, the bale is capped with soil into which the cucumber seedlings are planted. The seedlings are regularly supplied with water containing phosphate, potassium and nitrogen sources and during the growing season the straw gradually rots away.

Over the last 10 or 12 years the use of straw bales for cucumber production has started to be replaced by the use of rockwool ( a mineral fibre ) substrates. Similarly tomatoes, previously traditionally grown in soil, are increasingly being grown in rockwool. Rockwool substrates for these plants generally consist of a slab of rockwool pre-wrapped in a polythene sleeve which is placed on the floor of the glasshouse after covering this with a polythene sheet. This isolates the whole growth system from the soil and a complete hydroponic feed is consequently applied to each plant.

Although rockwool is an inert medium with good aeration and water holding properties and the use of rockwool works very well in terms of crop production, there is a major and increasing environmental problem in the disposal of the rockwool at the end of the crop. It is not suitable for incorporation into soil and therefore it has been simply dumped in landfill sites. In contrast vegetable fibres such as straw are biodegradable and hence more environmentally acceptable as well as appealing to the present environmentally conscious marketplace. Moreover straw is a waste product and present restrictions on disposal of stubble by burning may increase the amount of waste straw that becomes available.

The use of compressed and bound straw as a horticultural substrate is known, for example JP-A-54004703, JP-A-54094593 and JP-A-62138123 describe straw-based substrates in the form of blocks of various shapes tightly bound with sleeves or nets of plastics materials. GB-A- 2161466 describes a substrate in the form of small briquettes of compressed straw having a mean fibre length of less than 100 mm contained within a plastics bag.

Compressed straw is commercially available in the form of slabs formed from compressed unchopped straw and is used for building insulation. It would be highly desirable if this readily available material could be adopted for use as a horticultural substrate, as the use of specially adapted compression equipment, presses etc. specifically for substrate production could be avoided.

Accordingly this invention provides a plant growth substrate which comprises a slab of compressed straw, said straw having mean fibre length of greater than 100 mm, the slab having at least one pair of substantially parallel faces, at least 50% of the straw fibres having a general orientation aligned within 45° of a direction parallel to the plane of said substantially parallel faces, said slab having a thickness between 50 and 150 mm and being contained within a flexible envelope of plastics material of volume between 110% and 300% of the volume of slab.

The straw is preferably straw which has been grown without the use of chemical sprays, ie. of the type which is now popularly described as "organic" straw, although the slab may subsequently be impregnated with fertilisers, nutrients etc. if to do so is considered suitable.

The degree of compression is preferably such that the slab has a density of from 260 to 400 kg/m³, more preferably from 300 to 360 kg/m³ and most preferably about 330 kg/m³. This should be such that when the slab is retaining its maximum capacity of water and is used for the growth of plants it retains its structure for the entire growing season. The degree of compression applied to straw in the production of insulating slabs for buildings has been found to be suitable for this purpose.

The slab may incorporate binders provided these are non-toxic, but alternatively structural strength may result simply from compression of the fibres into the slab. It may be desirable to apply some coating to the straw fibres to inhibit decomposition. The source of the straw is not critical, and barley and wheat straws among others may be used, preferably without having been treated with potentially damaging chemical sprays. Uncut straw bales are conveniently used.

The slab preferably has at least two substantially parallel faces, more preferably being substantially tetragonal, and if it is this shape then a convenient ratio of length to width to thickness is 10-20: 1.5-4 : 1, for example 12-17 : 2.5-3.5 : 1. For use as a substrate for growth of cucumbers a convenient ratio is 15 : 3.3 : 1, and for tomatoes 15 : 2 : 1. A convenient thickness for the slab is 50-75mm, for example 60 mm as this is a common thickness for straw building insulating slabs. When the slab is tetragonal having a long length dimension as described above preferably at least 50% ideally 75% or more, of the fibres have a general orientation aligned within 45° of a direction parallel to the length direction.

Conveniently the slab may be formed from a compressed straw slab as made primarily for building insulation by cutting into a suitable shape and size as described above, for example using the largest faces of the slab as the pair of substantially parallel faces of the slab, and cutting the slab into a long tetragonal slab as described above. The cutting direction may be selected so as to achieve the preferred fibre orientation of the invention. Straw slab insulation is often finished with a coating of paper or cardboard and this may be present if the slab is cut from such slabs. This coating appears to provide no advantages, and is preferably not present.

The envelope may be made of any conventional water impermeable flexible plastics material but a preferred material is polythene. The envelope preferably completely encloses the slab and may be sealed around the slab by conventional methods such as welding or adhesives. The excess of volume of the envelope over the volume of the slab is intended to accommodate swelling of the slab on wetting and preferably is achieved in the case of a tetragonal slab by the use of an envelope having a width some 1.5 - 3 times the width of the slab, eg 2-2.5 times, as on wetting the slab, swelling primarily of the width of a tetragonal slab is expected, which can be up to around 50% of the width dimension.

In an embodiment of the invention which provides a suitable substrate for the growth of cucumber a substantially tetragonal compressed straw slab having dimensions 900 mm x 200 mm x 60 mm is used, contained within a polythene bag 400 mm wide. For tomatoes a slab 900 mm x 120 mm x 60 mm is suitable, contained within a polythene envelope 250 mm wide is suitable. These sizes are traditional in the agricultural industry, based upon plant spacing in the greenhouse and those skilled in the art may device alternatives more suited to particular crops or to commercial use.

In use the enveloped substrate is laid on a suitable base with one of the parallel faces adjacent to the base. One or more holes are cut in the envelope adjacent to and exposing the upper parallel face of the slab. These holes are of a suitable size to receive seeds or plants in growth containers or shaped media (eg. rockwool blocks having polythene wrappings about their sides but being open at their top and bottom surfaces) and to enable the base of the container to be in contact with the slab. Each hole should not be much larger than the corresponding cross section of the container or media it is to receive, to minimise evaporation of water.

The containers/media are then be rested directly upon the upper parallel face of the slab and a suitable hydroponic feed solution may then be fed to the plants by a conventional feed arrangement so that the slab too is wetted. Alternatively the slabs may be prewetted, and thus expanded. At a suitable time after planting holes may be made in the underside of the envelope to allow excess feed solution to drain away if so required. Initial growth of the plants in soil in the containers or the rockwool block is followed by the spread of roots into the slab. Thereafter the plants or vegetable products thereof, such as cucumbers or tomatoes, may be harvested in a conventional way. As well as cucumbers and tomatoes other plants eg sweet peppers and flower crops may be grown in this way.

Thus the present invention provides a method of growing plants comprising the steps of:
(a) making a hole in the substrate plastics envelope;
(b) placing a seedling plant or a plant seed in propagation medium onto the surface of the substrate straw slab via the hole in said plastics envelope and
(c) supplying the straw slab with a hydroponic feed solution.

The invention will now be described by way of example only with reference to Figures 1, 2 and 3 of the accompanying drawings. These show:

**Fig 1,** an overall perspective view of a tetragonal compressed straw slab.

**Fig 2,** a part cut away perspective view of the slab of Fig 1 enclosed in a plastic envelope.

**Fig 3,** a part sectioned view showing plants being grown using the substrate of the invention.

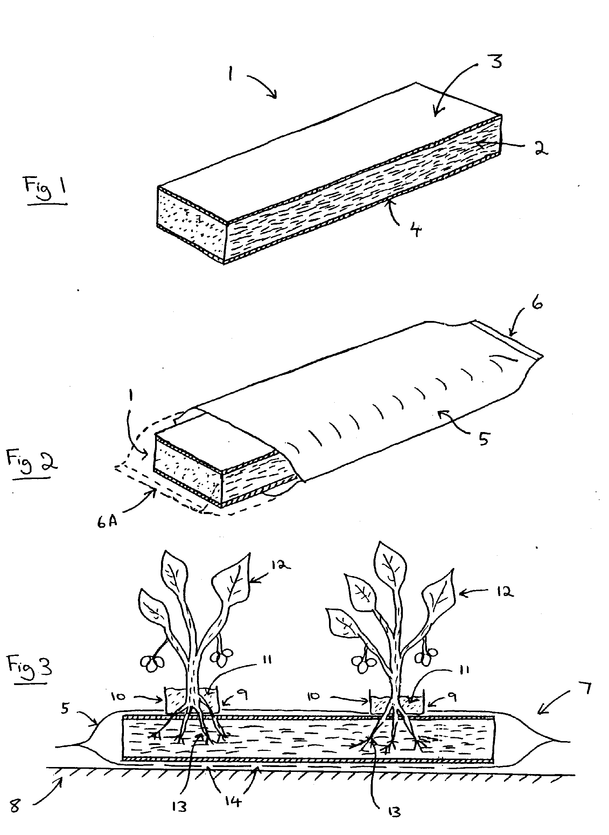

Referring to Fig 1, a tetragonal slab of compressed "organic" straw (1) has a long length dimension, a relatively narrow width dimension, and a smaller still thickness. A major proportion of the straw fibres (2) are aligned substantially parallel to the length of the slab. The upper and lower faces of the slab (1) are substantially parallel. The slab (1) has been cut from a commercially available compressed straw insulating slab and as a consequence on the upper and lower faces of the slab (1) there is a residual layer of paper (3, 4), the thickness of which is exaggerated in Fig 1.

Referring to Fig 2, the slab (1) of Fig 1 is wholly enclosed within an envelope (5) of polythene, in the form of a sleeve. The ends (6, 6A) of the envelope (5) have been sealed by hot welding. The dimension of the sleeve (5) in the direction of the width of the slab (1) is about twice the width of the slab (1).

Referring to Fig 3, the slab plus enclosing envelope (1)-(6) 20 of Fig 1 is shown (7) resting upon the floor (8) of a greenhouse. Holes (9) have been cut in the upper part of the envelope (5). These holes (9) are of a suitable size to receive plastic containers (10) having holes (not shown) in their bottom face, and containing soil (11). The containers are (10) simply resting upon the upper paper layer (3). The gap between the edges of the holes (9) and the side walls of the containers (10) is as small as possible.

Tomato plants (12) are shown growing on the slab (1). These were initially planted as seedlings. Upon watering of the containers (10) using a conventional hydroponic feed (not shown) the containers (10) are wetted and excess feed soaks through and out of the holes (not shown) in the bottom faces of containers (10) to wet the slab (1) which swells and loosens as a result. Watering also promotes growth of the seedlings to form plants (12) and the extension of roots (13) into the slab (1). Excess hydroponic feed drains out of slits (14) which have been cut in the underside of the envelope (5) about 7-10 days after planting the seedlings.

In an alternative method the seedlings are provided as propagated in a 0.65 litre rockwool block wrapped in polythene having openings at the bottom and top surfaces. The open bottom surface is placed directly onto to an exposed top surface of the prewetted or dry substrate block ; again the substrate exposure being through a similarly sized hole in the substrate envelope, and hydroponic solution is fed to it.

It should be noted that in each case a hydroponic feed solution is used which includes all necessary trace elements that are not available from the straw itself. In this respect the present method differs entirely from previous use of uncompressed straw described above, where such elements were provided by soil placed on top of the straw bales.

In all cases the paper or cardboard coating may optionally be removed at the point where the container or block is to be placed to facilitate rapid entry of roots into the straw.

The substrate of the present invention is found to support levels of plant growth which are equal to those obtained with conventional rockwool substrates.

## Claims

1. A plant growth substrate comprising a slab of compressed straw having mean fibre length in excess of 100 mm, the slab having at least one pair of substantially parallel faces, at least 50% of the straw fibres having a general orientation aligned within 45° of a direction parallel to the plane of said substantially parallel faces, said slab having a thickness between 50 and 150mm and being contained within a flexible envelope of plastics material of volume between 110 and 300% of the volume of said slab.

2. A growth substrate as claimed in claim 1 wherein the slab has a density of from 260 kg/m³ to 400 kg/m³.

3. A growth substrate as claimed in claim 1 wherein the slab has a density of from 300 kg/m³ to 360 kg/m³.

4. A growth substrate as claimed in claim 1 wherein the slab has a density of about 330 kg/m³.

5. A growth substrate as claimed in any one of claims 1 to 4 wherein the slab has at least two substantially parallel faces.

6. A growth substrate as claimed in claim 5 wherein the slab is substantially tetragonal.

7. A growth substrate as claimed in claim 5 wherein the ratio length : width : thickness of the slab is 10-20 : 1.5-4 : 1.

8. A growth substrate as claimed in claim 5 wherein 75% or more of the straw fibres have a general orientation aligned within 45° of a direction parallel to the length direction.

9. A growth substrate as claimed in claim 5 wherein said slab is formed from a compressed straw slab made primarily for building insulation.

10. A plant growth substrate according to any one of claims 5 to 9 wherein the envelope has a width 1.5 to 3 times the width of the slab.

11. A method of growing plants wherein the plants are caused to take root in a substrate as claimed in any one of claims 1 to 11 and then supplied with hydroponic feed solution.

12. A method of growing plants as claimed in claim 12 comprising the steps of:
(a) making a hole in the substrate plastics envelope;
(b) placing the seedling plant or a plant seed in propagation medium onto the surface of the substrate straw slab via the hole in said plastics envelope and
(c) supplying the straw slab with a hydroponic feed solution.

13. A method as claimed in claim 13 wherein the straw slab is prewetted to an expanded form.

14. A method as claimed in claim 13 or 14 wherein the seedling plant or plant seed is of cucumber, tomato, sweet pepper or a flower crop.

15. A method as claimed in claim 13, 14 or 15 wherein the propagation medium comprises soil and this is held within a container having openings in its bottom surface for allowing root growth into the straw slab.

16. A method as claimed in claim 13, 14 or 15 wherein the propagation medium comprises rockwool and this is provided as a rockwool block wrapped in polythene which does not cover the block top and bottom surfaces.

17. A method as claimed in any one of claims 13 to 17 wherein slits are cut in the bottom of the plastics material envelope after 7 to 10 days to allow drainage of excess hydroponic feed.

## Patentansprüche

1. Pflanzenwachstumssubstrat, das eine Platte aus zusammengepreßtem Stroh mit einer mittleren Faserlänge von über 100 mm enthält, wobei
die Platte mindestens 1 Paar im wesentlichen paralleler Flächen besitzt,
die Strohfasern zu mindestens 50 % eine allgemeine Orientierung aufweisen, die innerhalb von 45° zu einer Richtung parallel zur Ebene der im wesentlichen parallelen Flächen ausgerichtet ist,
und die Platte eine Dicke zwischen 50 und 150 mm hat und in einer flexiblen Hülle aus einem Kunststoffmaterial mit einem Volumen zwischen 110 und 300 % des Volumens der Platte enthalten ist.

2. Pflanzenwachstumssubstrat nach Anspruch 1, wobei die Platte eine Dichte von 260 bis 400 kg/m³ hat.

3. Pflanzenwachstumssubstrat nach Anspruch 1, wobei die Platte eine Dichte von 300 bis 360 kg/m³ hat.

4. Pflanzenwachstumssubstrat nach Anspruch 1, wobei die Platte eine Dichte von etwa 330 kg/m³ hat.

5. Pflanzenwachstumssubstrat nach einem der Ansprüche 1 bis 4, wobei die Platte mindestens zwei im wesentlichen parallele Flächen besitzt.

6. Pflanzenwachstumssubstrat nach Anspruch 5, wobei die Platte im wesentlichen viereckig ist.

7. Pflanzenwachstumssubstrat nach Anspruch 5, wobei das Verhältnis Länge : Breite : Dicke der Platte 10-20 : 1,5-4 : 1 beträgt.

8. Pflanzenwachstumssubstrat nach Anspruch 5, wobei mindestens 75 % der Strohfasern eine allgemeine Orientierung aufweisen, die innerhalb von 45° zu einer Richtung parallel zur Längsrichtung ausgerichtet ist.

9. Pflanzenwachstumssubstrat nach Anspruch 5, wobei die Platte aus einer Platte aus zusammengepreßtem Stroh besteht, die hauptsächlich für die Gebäudeisolierung hergestellt wird.

10. Pflanzenwachstumssubstrat nach einem der Ansprüche 5 bis 9, wobei die Hülle eine Breite hat, die 1,5- bis 3-fach so groß ist wie die Breite der Platte.

11. Verfahren zum Anbau von Pflanzen, wobei die Pflanzen in einem Substrat nach einem der Ansprüche 1 bis 10 wurzeln gelassen und dann mit einer Hydrokultur-Nährlösung versorgt werden.

12. Verfahren zum Anbau von Pflanzen nach Anspruch 11, das folgende Schritte umfaßt:
(a) Erzeugen eines Lochs in der Kunststoffhülle des Substrats,
(b) Anordnen des Setzlings oder eines Planzensamens in einem Wachstumsmedium auf der Oberfläche der als Substrat dienenden Strohplatte in dem Loch in der Kunststoffhülle und
(c) Versorgen der Strohplatte mit einer Hydrokultur-Nährlösung.

13. Verfahren nach Anspruch 12, wobei die Strohplatte unter Expansion vorbefeuchtet wird.

14. Verfahren nach Anspruch 12 oder 13, wobei der Setzling oder der Pflanzensamen von Gurke, Tomate, süßem Pfeffer oder Blumen stammen.

15. Verfahren nach Anspruch 12, 13 oder 14, wobei das Wachstumsmedium Erde umfaßt, die sich in einem Behälter mit Öffnungen an der Bodenfläche befindet, durch die ein Wurzelwachstum in die Strohplatte hinein ermöglicht wird.

16. Verfahren nach Anspruch 12, 13 oder 14, wobei das Wachstumsmedium Gesteinswolle umfaßt, die als mit Polyethylen überzogener Gesteinswollblock vorliegt, wobei das Polyethylen die obere und die untere Oberfläche des Blocks nicht bedeckt.

17. Verfahren nach einem der Ansprüche 12 bis 16, wobei nach 7 bis 10 Tagen Schlitze in den Boden der Kunststoffhülle geschnitten werden, um das Abfließen von überschüssiger Hydrokultur-Nährlösung zu ermöglichen.

## Revendications

1. Substrat pour la croissance de plantes, ce substrat comprenant une plaque de paille comprimée ayant une longueur moyenne de fibres excédant 100 mm, la plaque ayant au moins une paire de faces sensiblement parallèles, au moins 50 % des fibres de la paille ayant une orientation générale alignée à moins de 45° d'une direction parallèle au plan desdites faces sensiblement parallèles, ladite plaque ayant une épaisseur comprise entre 50 et 150 mm et étant contenue dans une enveloppe flexible de matière plastique, dont le volume se situe entre 110 et 300 % du volume de ladite plaque.

2. Substrat pour croissance, tel que revendiqué à la revendication 1, dans le cas duquel la plaque a une masse volumique de 260 kg/m³ à 400 kg/m³.

3. Substrat pour croissance tel que revendiqué à la revendication 1, dans le cas duquel la plaque a une masse volumique de 300 kg/m³ à 360 kg/m³.

4. Substrat pour croissance tel que revendiqué à la revendication 1, dans le cas duquel la plaque a une masse volumique d'environ 330 kg/m³.

5. Substrat pour croissance tel que revendiqué dans l'une quelconque des revendications 1 à 4, dans le cas duquel la plaque comporte au moins deux faces sensiblement parallèles.

6. Substrat pour croissance tel que revendiqué à la revendication 5, dans le cas duquel la plaque est sensiblement tétragonale.

7. Substrat pour croissance tel que revendiqué à la revendication 5, dans le cas duquel le rapport longueur:largeur:épaisseur de la plaque vaut 10-20:1,5-4:1.

8. Substrat pour croissance tel que revendiqué à la revendication 5, dans le cas duquel au moins 75 % des fibres de la paille ont une orientation générale alignée à moins de 45° d'une direction parallèle à la direction de la longueur (de la plaque).

9. Substrat pour croissance, tel que revendiqué à la revendication 5, dans le cas duquel ladite plaque est formée à partir d'une plaque de paille comprimée réalisée en premier lieu pour l'isolation de bâtiments et immeubles.

10. Substrat pour croissance de plantes selon l'une quelconque des revendications 5 à 9, dans le cas duquel l'enveloppe a une largeur représentant 1,5 à 3 fois la largeur de plaque.

11. Procédé pour faire croître et cultiver des plantes, dans le cas duquel on oblige les plantes à prendre racine dans un substrat tel que revendiqué dans l'une quelconque des revendications 1 à 10,puis on leur fournit une solution d'alimentation hydroponique.

12. Procédé pour faire croître et cultiver des plantes, tel que revendiqué à la revendication 11, comprenant les étapes consistant à :
(a) pratiquer un trou dans l'enveloppe en matière plastique entourant le substrat ;
(b) placer, par le trou pratiqué dans ladite enveloppe en matière plastique, la plante en train de germer ou un germe de plante en milieu de propagation sur la surface de la plaque de paille servant de substrat ; et
(c) fournir à la plaque de paille une solution d'alimentation hydroponique.

13. Procédé selon la revendication 12, dans le cas duquel la plaque de paille est pré-mouillée jusqu'à prendre une forme dilatée.

14. Procédé selon la revendication 12 ou 13, dans le cas duquel la plante en train de germer ou le germe de plante est du concombre, de la tomate, du poivre doux ou une plante cultivée donnant des fleurs.

15. Procédé tel que revendiqué dans l'une des revendications 12, 13 ou 14, dans le cas duquel le milieu de propagation comprend de la terre et il est maintenu au sein d'un récipient ayant à sa surface inférieure des ouvertures destinées à permettre la croissance des racines et leur pénétration dans la plaque de paille.

16. Procédé tel que revendiqué dans l'une des revendications 12, 13 ou 14, dans le cas duquel le milieu de propagation comprend de la laine minérale et cette laine est fournie sous forme d'un bloc de laine minérale enveloppée dans du polythène qui ne recouvre pas les surfaces supérieure et inférieure du bloc.

17. Procédé tel que revendiqué dans l'une quelconque des revendications 12 à 16, dans le cas duquel on découpe au bout de 7 à 10 jours des fentes dans le fond ou le bas de l'enveloppe en matière plastique pour permettre l'écoulement de drainage de l'alimentation hydroponique excédentaire.
